# EUROPÄISCHE PATENTANMELDUNG

(11) **EP 1 273 895 A2**
(43) Veröffentlichungstag der Anmeldung: **08.01.2003**
(21) Anmeldenummer: 02100756.2
(22) Anmeldetag: 27.06.2002
(51) Int. Cl.: G01J 9/02

(54) **Interferometrische Messvorrichtung zur Wellenlängenkalibrierung**

(30) Priorität: 04.07.2001 DE 10131898
(71) Anmelder: Leica Microsystems Semiconductor GmbH, 35578 Wetzlar (DE)
(72) Erfinder: KACZYNSKI, Ulrich, 61231, Bad Nauheim (DE); RINN, Klaus,Dr., 35452, Heuchelheim (DE)
(74) Vertreter: Reichert, Werner F., Dr.

(57) **Zusammenfassung**

Die vorliegende Erfindung betrifft eine interferometrische Messvorrichtung zur Wellenlängenkalibrierung mit einer Laserlichtquelle (1), einem Detektor (2) und einem Interferometer (3), wobei die Laserlichtquelle (1) Licht mindestens einer Wellenlänge emittiert, wobei das Interferometer (3) das Licht der Laserlichtquelle (1) in zwei Teilstrahlen (4, 5)- einen Referenzstrahl (4) und einen Messstrahl (5) - trennt und die Teilstrahlen (4, 5) nach mindestens einer Reflexion an jeweils einem Reflexionsmittel (6) wieder vereinigt, wobei die Weglängendifferenz zwischen dem Referenzstrahl (4) und dem Messstrahl (5) eine konstante Wellenlängen-Kalibrierstrecke definiert. Zur Erhöhung der Messgenauigkeit bzw. zur Verringerung der Messfehler kann die Strecke des Messstrahls verlängert werden, ohne jedoch Probleme bei der Fertigung, Montage und/oder Justage zu verursachen. Die erfindungsgemäße interferometrische Messvorrichtung ist dadurch gekennzeichnet, dass im Strahlengang des Messstrahls (5) mindestens ein zusätzliches Reflexionsmittel (8) vorgesehen ist, das den Messstrahl zumindest weitgehend in die entgegengesetzte Richtung reflektiert.

## Beschreibung

Die vorliegende Erfindung betrifft eine interferometrische Messvorrichtung zur Wellenlängenkalibrierung mit einer Laserlichtquelle, einem Detektor und einem Interferometer, wobei die Laserlichtquelle Licht mindestens einer Wellenlänge emittiert, wobei das Interferometer das Licht der Laserlichtquelle in zwei Teilstrahlen - einen Referenzstrahl und einen Messstrahl - trennt und die Teilstrahlen nach mindestens einer Reflexion an jeweils einem Reflexionsmittel wieder vereinigt, wobei die Weglängendifferenz zwischen dem Referenzstrahl und dem Messstrahl eine konstante Wellenlängen-Kalibrierstrecke definiert.

Interferometrische Messvorrichtungen werden vielfältig für hochgenaue Abstands- und Positionsmessungen eingesetzt. Bei einer hochgenauen interferometrischen Messung wird in der Regel der relative Weglängenunterschied zwischen einem Messspiegel an einem verfahrbaren Messobjekt im Messstrahlengang und einem Referenzspiegel im Referenzstrahlengang gemessen. Bei der Messung wird bestimmt, wie sich die Phase des Lichtes bei der Bewegung des Messobjekts ändert. Dabei ist die Wellenlänge des Lichtstrahls der Maßstab der Messung. Der relative Weglängenunterschied wird also in der Einheit "Wellenlänge" angegeben. Der aktuelle Wert der Wellenlänge eines Lichtstrahls hängt vom Brechungsindex des von dem Lichtstrahl durchlaufenen Mediums ab. Der Brechungsindex variiert beispielsweise durch langsame Änderungen oder schnelle Schwankungen von Temperatur, Luftdruck und Luftfeuchte oder auch Änderungen der Luftzusammensetzung. Die Schwankungen in den Messergebnissen aufgrund von Wellenlängenänderungen sind bei typischen Messungen zum Beispiel mit einem Koordinaten-Messgerät an Wafern und Masken mit ungefähr ± 0,1 µm nicht mehr vernachlässigbar gegenüber den zu messenden Strukturen und sind daher für die geforderte Messgenauigkeit nicht tragbar.

Zur Erhöhung der Messgenauigkeit ist eine Berücksichtigung der Wellenlängenänderung des Lichtstrahls in Form einer ständigen Wellenlängenkorrektur erforderlich.

Für hochgenaue Entfernungsmessungen könnte das Koordinaten-Messgerät, wie es z.B. aus der DE 198 19 492 bekannt ist, in einer Klimakammer betrieben werden. In dieser wird zumindest die Temperatur, in einigen Klimakammern zusätzlich auch die Luftfeuchte konstant gehalten. Der Regelgenauigkeit von Temperatur und Luftfeuchte sind technische Grenzen gesetzt. Auch lässt sich mit vertretbarem Aufwand keine hermetische dichte Kammer zur Konstanthaltung des Luftdrucks herstellen, insbesondere weil - beim Beispiel des Koordinaten-Messgeräts - ein einfaches und schnelles Wechseln der Messobjekte notwendig ist. So verursacht das Betätigen der Beladeöffnung selbst schnelle Luftdruckschwankungen.

In einer gesonderten Messung muss daher die Interferometerwellenlänge ständig erfasst werden. Dies kann durch Vermessen einer Wellenlängen-Kalibrierstrecke mit konstanter Länge (sogenannter "wavelength tracker") oder durch Messen der Einflussfaktoren wie Temperatur, Luftfeuchte etc. und ständige Berechnung der aktuellen Wellenlänge geschehen. Diese Wellenlängenkorrektur ist aber grundsätzlich fehlerbehaftet, weil zum Beispiel die Präzision der ihr zugrundeliegenden Messungen nur endlich ist oder weil eine hochpräzise Messung nicht notwendig schnell genug ist, um rasche Änderungen der Messgröße wiederzugeben. Damit liefert die Wellenlängenkorrektur auch einen Fehler zur korrigierten Wellenlänge.

Insbesondere bei interferometrischen Messvorrichtungen, bei denen interferometrische Messungen mit Licht zweier unterschiedlicher Wellenlängen durchgeführt werden, ist eine erhebliche Fehlerquelle durch die endliche Auflösung bei der Messung der Phasendifferenz am Interferometerausgang sowie der sogenannte Interpolatorfehler. Dieser wird bei Heterodynlasern dadurch erzeugt, dass die Polarisationstrennung der beiden Laserwellenlängen nicht ideal ist. So sind kleine Anteile des Laserlichts der falschen Wellenlänge in den beiden Polarisationskomponenten zu finden. Ein Beispiel einer interferometrischen Messvorrichtung ist der kommerziell erhältliche Laser-Interferometer HP 10702 der Firma Hewlett Packard.

Die beiden erwähnten Fehlerkomponenten haben eine feste, maximale Größe, die unabhängig von der Länge der Messstrecke ist. Der Messfehler δL bei der Messung der Wellenlängen-Kalibrierstrecke der Länge L geht als relativer Fehler δL/L in die Distanzmessung ein. Man könnte ihn daher unterdrücken oder zumindest verringern, indem man die Wellenlängen-Kalibrierstrecke lang genug macht. Der Fehler der Referenzmessung wird dann klein gegenüber der Messung sein, wenn die Referenzstrecke entsprechend klein gegenüber der Wellenlängen-Kalibrierstrecke ist. Es existieren - ebenfalls von der Firma Hewlett Packard, Modell 10717 A - kommerziell erhältliche Wellenlängen-Kalibrierstrecken, die jedoch für Distanzmessungen im Bereich über 50 mm diese Längenbedingung nicht erfüllen.

Sehr lange Wellenlängen-Kalibrierstrecken erfordern einen ganz erheblichen Bauraum, insbesondere beim Einbau in Koordinaten-Messgeräte zur Vermessung von Masken und Wafer. Daher liegt eine Faltung des Laserstrahls, also eine mehrmalige Reflexion des Laserstrahls in der Wellenlängen-Kalibrierstrecke nahe. Bekannt sind Anordnungen, bei denen der Lichtstrahl leicht verkippt verläuft, so dass der Laserstrahl im "zick-zack" den Strahlengang mehrmals durchläuft. Diese Anordnung bietet maximale Verlängerung der Messstrecke, allerdings ist die Fertigung, Montage und Justage einer solchen Spiegelanordnung bei kleinen Kippwinkeln sehr schwierig.

Der vorliegenden Erfindung liegt daher die Aufgabe zugrunde, eine interferometrische Messvorrichtung zur Wellenlängenkalibrierung der gattungsbildenden Art anzugeben, die eine Erhöhung der Messgenauigkeit bzw. eine Verringerung der Messfehler gewährleistet und zugleich eine einfache Fertigung, Montage und/oder Justage erlaubt.

Die erfindungsgemäße interferometrische Messvorrichtung der gattungsbildenden Art löst die voranstehende Aufgabe durch die Merkmale des Patentanspruchs 1. Danach ist eine solche interferometrische Messvorrichtung dadurch gekennzeichnet, dass im Strahlengang des Messstrahls mindestens ein zusätzliches Reflexionsmittel vorgesehen ist, das den Messstrahl zumindest weitgehend in die entgegengesetzte Richtung reflektiert.

Zunächst ist erkannt worden, dass man die Strecke eines Teilstrahls durch eine zusätzliche Reflexion - wie auch schon aus dem Stand der Technik vorbekannt - verlängern kann. Allerdings wird in erfindungsgemäßer Weise der Messstrahl zumindest weitgehend in die entgegengesetzte Richtung reflektiert, d.h. der auf das zusätzliche Reflexionsmittel auftreffende und der davon reflektierte Messstrahl schließen keine spitzen Winkel von beispielsweise 10 oder 20 Grad ein, was insbesondere in der Fertigung und Montage problematisch zu handhaben ist. Vielmehr ist eine zusätzliche Reflexion vorgesehen, die den Lichtstrahl beispielsweise in sich zurückreflektiert oder parallel zum einfallenden Strahl reflektiert. Durch diese Maßnahme kann der Messfehler der Wellenlängen-Kalibrierstrecke verringert werden, z.B. bei einer Verdopplung der Wellenlängen-Kalibrierstrecke kann somit der Messfehler halbiert werden. In besonders vorteilhafter Weise kann die zusätzliche Reflexion des Messstrahls durch Einfügen eines zusätzlichen Reflexionsmittels mit geringem zusätzlichem konstruktiven Aufwand kostengünstig realisiert werden, wobei an die hierbei erforderlichen Justage- und Fertigungstoleranzen geringe Anforderungen gestellt werden.

In einer ganz besonders bevorzugten Ausführungsform reflektiert das zusätzliche Reflexionsmittel den auf ihn auftreffenden Messstrahl im Wesentlichen mit einem Parallelversatz in die entgegengesetzte Richtung zurück. Diese Ausführungsform ermöglicht in vorteilhafter Weise eine Verlängerung der jeweiligen Teilstrecke ohne jedoch wesentlich mehr Bauraum in Anspruch zu nehmen. Hierdurch kann bei einer geeigneten Anordnung der Reflexionsmittel der Messstrahl mehrmals hin und her geleitet werden.

Nun könnte eines der Reflexionsmittel am Interferometer angeordnet sein. So könnte ein als Spiegel ausgestaltetes Reflexionsmittel - eine planparallele Form des Spiegels vorausgesetzt - einfach an einer entsprechenden Stelle auf den Interferometer aufgeklebt werden, so dass eine ganz besonders einfache Fertigung bei einem nahezu vernachlässigbaren Justieraufwand möglich ist.

In einer ganz besonders bevorzugten Ausführungsform ist das Reflexionsmittel des Messstrahls mit dem zusätzlichen Reflexionsmittel einstückig ausgebildet. Hierdurch kann bei einer geeigneten Fertigung mit entsprechender Genauigkeit eine Führung des Teilstrahls in erfindungsgemäßer Weise sichergestellt werden, ohne unterschiedliche Komponenten relativ zueinander in aufwendiger Weise justieren zu müssen.

Alternativ hierzu könnten das Reflexionsmittel des Messstrahls mit dem zusätzlichen Reflexionsmittel des Messstrahls an einer gemeinsamen Halterung angeordnet sein. Insoweit ist das Reflexionsmittel des Messstrahls mit dem zusätzlichen Reflexionsmittel über ein und dieselbe Halterung zwangsgekoppelt, so dass auch hier eine einfache Vorfertigung der Baugruppe, bestehend aus Reflexionsmittel, zusätzlichem Reflexionsmittel und Halterung, möglich ist, wobei schon im Rahmen der Vorfertigung eine Justage der einzelnen Komponenten relativ zueinander erfolgen könnte.

Das Reflexionsmittel könnte als Spiegel oder als Umlenkprisma ausgeführt sein. Falls ein Spiegel bzw. ein Planspiegel als Reflexionsmittel eingesetzt wird, wäre dieser mit seiner reflektierenden Spiegelfläche orthogonal zum Messstrahl anzuordnen, so dass der auf den Spiegel bzw. Planspiegel auftreffende Messstrahl im wesentlichen in sich zurückreflektiert wird. Falls als Reflexionsmittel ein Umlenkprisma verwendet wird, könnte hierbei - eine entsprechende Ausführung des Umlenkprismas sowie eine entsprechende Anordnung im Messstrahlengang vorausgesetzt - eine im wesentlichen parallelversetzte Rückreflexion des Messstrahls am Umlenkprisma erfolgen.

In einer besonders bevorzugten Ausführungsform weist das Reflexionsmittel zwei Spiegel auf. Die Reflexionsflächen der Spiegel sind in einem Winkel von im wesentlichen 90 Grad zueinander angeordnet. Der vom Interferometer aus gesehen erste im Messstrahlengang angeordnete Spiegel des Reflexionsmittels könnte in einem Winkel von im wesentlichen 45 Grad zum Messstrahl angeordnet sein, so dass der am ersten Spiegel reflektierte Lichtstrahl auf den zweiten Spiegel ebenfalls in einem Winkel von im wesentlichen 45 Grad auftrifft und nach erneuter Reflexion den Lichtstrahl im wesentlichen parallelversetzt zu dem vom Interferometer kommenden Lichtstrahl zurückreflektiert.

In einer konkreten Ausführungsform sind die Reflexionsmittel an einer gemeinsamen Halterung angeordnet. Die Halterung weist zwei abgeschrägte Flächen auf, die einen Winkel von im wesentlichen 90 Grad zueinander aufweisen. Die beiden Spiegel des zusätzlichen Reflexionsmittels sind an den abgeschrägten Flächen unmittelbar anbringbar. Die Halterung könnte zur einfacheren Herstellung aus zwei oder mehreren Teilen bestehen.

In besonders vorteilhafter Weise ist vorgesehen, ein Mikroskop und insbesondere ein Koordinaten-Messgerät mit einer interferometrischen Messvorrichtung zur Wellenlängenkalibrierung nach einem der Ansprüche 1 bis 8 auszurüsten. Hierdurch kann beispielsweise bei einem Koordinaten-Messgerät in erfindungsgemäßer Weise die Variation der Wellenlänge in Abhängigkeit von Luftdruck, Lufttemperatur, Luftfeuchtigkeit und/oder Luftzusammensetzung detektiert werden.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: eine schematische Darstellung eine aus dem Stand der Technik bekannte interferometrische Messvorrichtung,
- Fig. 2: eine schematische Darstellung eines Ausführungsbeispiels der vorliegenden Erfindung und
- Fig. 3: eine schematische Darstellung einer konkreten konstruktiven Ausführungsform aus Fig. 2.

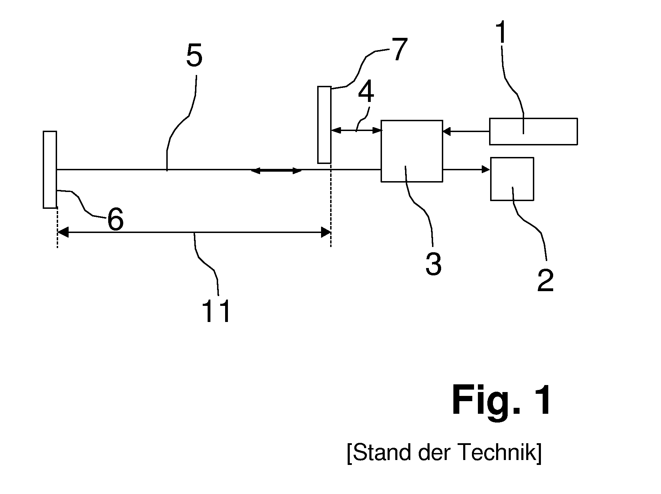

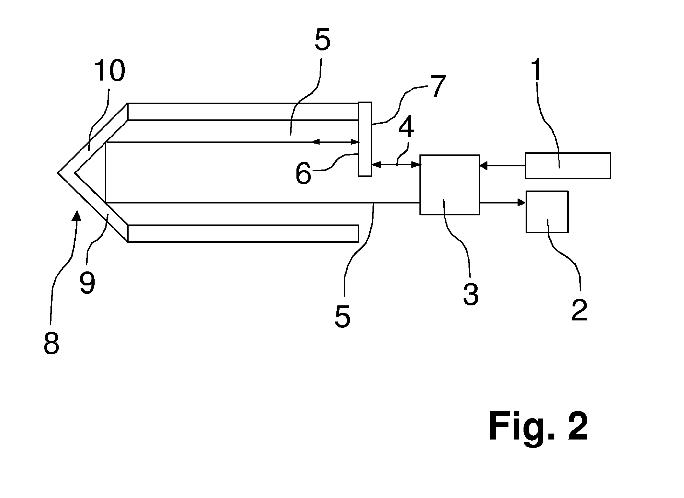

Die Fig. 1 und 2 zeigen in einer schematischen Darstellung eine interferometrische Messvorrichtung zur Wellenlängenkalibrierung mit einer Laserlichtquelle 1, einem Detektor 2 und einem Interferometer 3. Die Laserlichtquelle 1 emittiert Licht zweier unterschiedlicher Wellenlängen. Das Interferometer 3 trennt das Licht der Laserlichtquelle 1 in zwei Teilstrahlen 4, 5 auf, nämlich in einen Referenzstrahl 4 und einen Messstrahl 5. Das Interferometer 3 vereinigt die beiden Teilstrahlen 4, 5 nach zwei Reflexionen an den Reflexionsmitteln 6, 7. Die Weglängendifferenz zwischen dem Referenzstrahl 4 und dem Messstrahl 5 definiert eine konstante Wellenlängen-Kalibrierstrecke 11, die nur in Fig. 1 gezeigt ist.

Erfindungsgemäß ist im Strahlengang der in Fig. 2 gezeigten interferometrischen Messvorrichtung ein zusätzliches Reflexionsmittel 8 vorgesehen, das den Messstrahl 5 in die entgegengesetzte Richtung reflektiert.

Die in Fig. 2 gezeigte interferometrische Messvorrichtung dient zur Detektion von Wellenlängenveränderungen des von der Laserlichtquelle 1 emittierten Lichts aufgrund von sich verändernden Umgebungsbedingungen. Hierbei weist die den Messstrahl 5 durchlaufene Strecke eine konstante Länge auf. Der Messstrahl 5 wird durch das zusätzliche Reflexionsmittel 8 mit einem Parallelversatz in die entgegengesetzte Richtung zurückrückreflektiert, so dass der Messstrahl 5 durch das zusätzliche Reflexionsmittel 8 in Verbindung mit dem Reflexionsmittel 6 verlängert wird.

Fig. 2 ist entnehmbar, dass das Reflexionsmittel 6 des Messstrahls 5 einstückig mit dem zusätzlichen Reflexionsmittel 8 ausgebildet ist. Insoweit handelt es sich hierbei um ein einziges Bauteil. Das Reflexionsmittel 6 aus Fig. 2 wirkt als Spiegel, d.h. das einstückige Bauteil ist an dieser Stelle mit einer verspiegelten Beschichtung versehen.

Das zusätzliche Reflexionsmittel 8 aus Fig. 2 weist zwei Spiegel 9, 10 auf. Die Reflexionsflächen der Spiegel sind in einem Winkel von 90 Grad zueinander angeordnet. Das zusätzliche Reflexionsmittel 8 könnte auch einstückig ausgebildet sein, sozusagen als Winkelspiegel. Hierbei sind ebenfalls die Reflexionsflächen in einem Winkel von 90 Grad zueinander angeordnet.

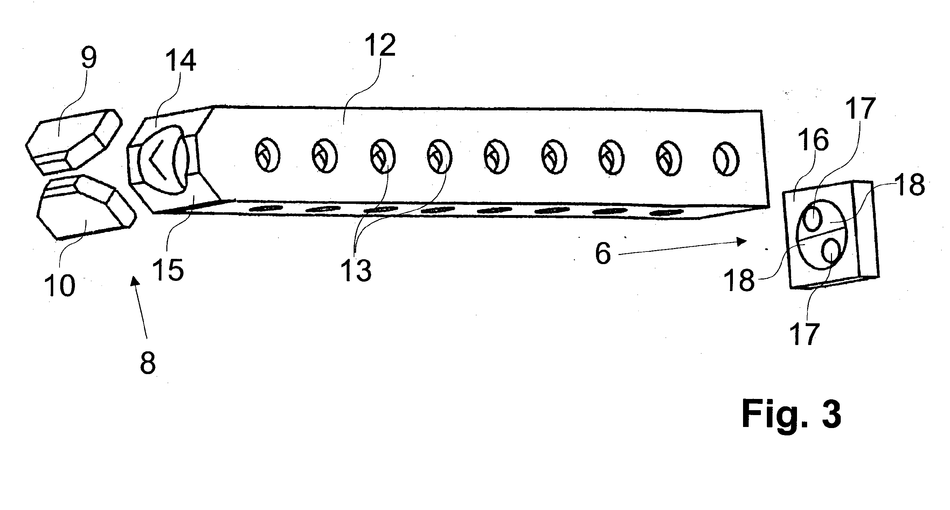

Fig. 3 zeigt in einer schematischen dreidimensionalen Explosionsansicht die Halterung 12 des Reflexionsmittels 6 und des zusätzlichen Reflexionsmittels 8. Die Halterung 12 hat eine quaderförmige Außenform, ist innen hohl und weist mehrere Durchtritte 13 auf. Durch die Durchtritte 13 kann die Umgebungsluft durchtreten, so dass der Einfluss der Umgebungsluft auf die Wellenlänge mit der erfindungsgemäßen interferometrischen Messvorrichtung gemessen werden kann. Das zusätzliche Reflexionsmittel 8 besteht hier aus den beiden Spiegeln 9 und 10, die direkt auf die beiden abgeschrägten Flächen 14 und 15 aufgebracht werden. Die abgeschrägten Flächen 14, 15 weisen einen Winkel von 90 Grad zueinander auf, der mit einer entsprechenden Fräsmaschine sehr genau gefertigt werden kann. Die Spiegel 9 und 10 werden jeweils auf die abgeschrägten Flächen 14 und 15 aufgesprengt, d.h. ein Spiegel wird zunächst auf die jeweilige Fläche aufgelegt und um eine kleine Strecke verschoben, wobei ein leichter Druck auf den Spiegel in Richtung der Fläche ausgeübt wird. Die Spiegel 9, 10 sind hierdurch aufgrund der Adhäsionskraft zwischen Halterung 12 und Spiegel 9 bzw. 10 miteinander verbunden. Die äußere Grenzfläche wird sodann mit einem Lack versiegelt, um Korrosion der Bauteile zu verhindern.

Das Bauteil 16 wird ebenfalls an die Halterung 12 angesprengt. Das Bauteil 16 weist zwei Durchtritte 17 auf, durch die der Messstrahl 5 - nicht in Fig. 3 gezeigt - in die Halterung gelangt. Die beiden Durchtritte 17 sind deshalb vorgesehen, weil vom Interferometer zwei Messstrahlen ausgehen. Weiterhin weist das Bauteil 16 einen verspiegelten Bereich 18 auf, der den an den beiden Spiegeln 9, 10 reflektierten Messstrahl zurückreflektiert.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

### Bezugszeichenliste

- 1: Laserlichtquelle
- 2: Detektor
- 3: Interferometer
- 4: Teilstrahl, Referenzstrahl
- 5: Teilstrahl, Messstrahl
- 6: Reflexionsmittel
- 7: Reflexionsmittel
- 8: zusätzliches Reflexionsmittel
- 9: Spiegel
- 10: Spiegel
- 11: Wellenlängen-Kalibrierstrecke
- 12: Halterung
- 13: Durchtritte der Halterung 12
- 14: Abgeschrägte Fläche
- 15: abgeschrägte Fläche
- 16: Bauteil
- 17: Durchtritt
- 18: verspiegelter Bereich von (16)

## Patentansprüche

1. Interferometrische Messvorrichtung zur Wellenlängenkalibrierung mit
- einer Laserlichtquelle (1), die Licht mindestens einer Wellenlänge emittiert
- einem Detektor (2)
- und einem Interferometer (3), welches das Licht der Laserlichtquelle (1) in zwei Teilstrahlen (4, 5) - einen Referenzstrahl (4) und einen Messstrahl (5) - trennt und die Teilstrahlen (4, 5) nach mindestens einer Reflexion an jeweils einem Reflexionsmittel (6, 7) wieder vereinigt, wobei die Weglängendifferenz zwischen dem Referenzstrahl (4) und dem Messstrahl (5) eine konstante Wellenlängen-Kalibrierstrecke (11) definiert,
**dadurch gekennzeichnet,**
**dass** im Strahlengang des Messstrahls (5) mindestens ein zusätzliches Reflexionsmittel (8) vorgesehen ist, das den Messstrahl (5) zumindest weitgehend in die entgegengesetzte Richtung reflektiert.

2. Messvorrichtung nach Anspruch 1, **dadurch gekennzeichnet, dass** das zusätzliche Reflexionsmittel (8) den auf ihn auftreffenden Messstrahl (5) im wesentlichen mit einem Parallelversatz in die entgegengesetzte Richtung zurückreflektiert.

3. Messvorrichtung nach Anspruch 1 oder 2, **dadurch gekennzeichnet, dass** das eines der Reflexionsmittel (6) am Interferometer angeordnet ist.

4. Messvorrichtung nach einem der Ansprüche 1 bis 3, **dadurch gekennzeichnet, dass** das Reflexionsmittel (6) des Messstrahls (5) einstückig mit dem zusätzlichen Reflexionsmittel (8) ausgebildet oder an einer gemeinsamen Halterung (12) angeordnet ist.

5. Messvorrichtung nach einem der Ansprüche 1 bis 4, **dadurch gekennzeichnet, dass** das Reflexionsmittel (6, 7, 8) als Spiegel oder als Umlenkprisma ausgeführt ist.

6. Messvorrichtung nach einem der Ansprüche 1 bis 5, **dadurch gekennzeichnet, dass** das zusätzliche Reflexionsmittel (8) zwei Spiegel (9, 10) aufweist.

7. Messvorrichtung nach Anspruch 6, **dadurch gekennzeichnet, dass** die Reflexionsflächen der Spiegel (9, 10) in einen Winkel von im wesentlichen 90 Grad zueinander angeordnet sind.

8. Messvorrichtung nach Anspruch 7, **dadurch gekennzeichnet, dass** die Reflexionsmittel (6, 7, 8) an einer gemeinsamen Halterung (12) angeordnet sind und diese Halterung (12) zwei abgeschrägte Flächen (14, 15) aufweist, die einen Winkel von im wesentlichen 90 Grad zueinander aufweisen, und dass die beiden Spiegel (9, 10) an die abgeschrägten Flächen (14, 15) unmittelbar anbringbar sind.

9. Mikroskop, insbesondere Koordinaten-Messgerät, **gekennzeichnet durch** eine interferometrische Messvorrichtung zur Wellenlängenkalibrierung nach einem der Ansprüche 1 bis 8.
